# EUROPEAN PATENT SPECIFICATION

(11) **EP 3 276 995 B1**
(45) Date of publication and mention of the grant of the patent: **21.10.2020**
(21) Application number: 17182919.5
(22) Date of filing: 25.07.2017
(51) Int. Cl.: H04W 8/18, H04W 8/20

(54) **INFORMATION WRITING METHOD AND DEVICE**
INFORMATIONSSCHREIBVERFAHREN UND -VORRICHTUNG
PROCÉDÉ ET DISPOSITIF D'ÉCRITURE D'INFORMATIONS

(30) Priority: 29.07.2016 WO PCT/CN2016/092429
(43) Date of publication of application: 31.01.2018
(73) Proprietor: Beijing Xiaomi Mobile Software Co., Ltd., Beijing 100085 (CN)
(72) Inventor: WU, Xiaojun, Beijing, Beijing 100085 (CN); JIN, Feng, Beijing, Beijing 100085 (CN); LIU, Guilin, Beijing, Beijing 100085 (CN)
(74) Representative: dompatent von Kreisler Selting Werner - Partnerschaft von Patent- und Rechtsanwälten mbB

(56) References cited:
- WO-A1-2010/015883
- US-A1- 2006 030 315
- US-A1- 2014 031 012

## Description

### TECHNICAL FIELD

The present disclosure relates to the technical field of communication, and more particularly, to an information writing method and device.

### BACKGROUND

A set of code number information is stored in a Subscriber Identification Module (SIM) card of a terminal, the set of code number information usually corresponds to a communication number, and when the code number information of the SIM card passes verification by an operator, the SIM card may access a network of the operator, and a user may use the communication number.

When a terminal is required to write code number information into a SIM card, a related information writing method includes that: the terminal accesses a network of an operator, and when it is necessary to write the code number information in the SIM card of the terminal, the network of the operator sends the code number information to an Over the Air Technology (OTA) gateway, the OTA gateway converts the code number information into an OTA short message and then sends the OTA short message to a short message service center, the short message service center sends the short message to the terminal, the terminal sends the OTA short message to the SIM card through a dedicated interface, and the SIM card writes the code number information according to the received OTA short message, wherein the dedicated interface is an interface specially configured for the terminal to send the OTA short message to the SIM card.

WO 2010/015883 A1 discloses a SIM card personalization system, wherein the SIM card information can be replaced, at the time of the request of the subscriber, with an unoccupied IMSI in the HLR to which the telephone number (MSISDN) belongs and which thus reduces the levels of SIM card stocks kept by the GSM operators and provides a more efficient, safer and faster service.

### SUMMARY

The object of the invention is defined in the appended set of claims. Accordingly, the present disclosure provides an information writing method and device, in accordance with claims which follow.

According to a first aspect of the embodiments of the present disclosure, there is provided an information writing method in accordance with claim 1, including:
acquiring code number information of a Subscriber Identification Module (SIM) card, the code number information being verification information during access of the SIM card to a network of an operator;
sending the code number information to a Card Operating System (COS) of the SIM card through an original interface in an operating system, the original interface being a communication interface programmed for transmission of other information between the operating system and the COS; and
writing the code number information into the SIM card through the COS. Hence, no additional interface between the COS and the SIM card is necessary for writing the code number information into the SIM card due to the use of the original interface between COS and SIM card. Thereby, the original interface is a communication interface programmed for transmission of said other information between the operating system and the COS, and said other information is information transmitted through the original interface when an original function of the original interface is implemented. For example, when the original interface is an SIM card short message read-write interface, the original function of the original interface is to read and write a short message of the SIM card, and at this moment, said other information is the short message; and when the original interface is a contact read-write interface, the original function of the original interface is to read and write a contact, and at this moment, said other information is contact information.

According to the present disclosure, the code number information is sent to the COS of the SIM card through the original interface in the operating system, the original interface being the communication interface programmed for transmission of said other information between the operating system and the COS; and the code number information is written into the SIM card through the COS. In this way, the code number information can be transmitted through the original interface, so that not only complexity in implementation of transmission of the code number information is reduced, but also the problem of incapability of writing the code number information into the SIM card due to operator's limitation on reception of an OTA short message by a terminal is also solved, and an effect of increasing success rate of code number information writing is achieved.

According to an exemplary embodiment, sending the code number information to the COS of the SIM card through the original interface in the operating system may include that:
determining n parameters comprised in said other information transmitted by virtue of the original interface, where n≥1;
encrypting the code number information, and obtaining said other information packaged from the code number information by taking ciphertexts obtained by encryption as parameter values of the n parameters; and
sending said other information packaged from the code number information to the COS through the original interface in the operating system.

According to the present disclosure, the n parameters included in said other information transmitted by virtue of the original interface are determined; the code number information is encrypted, and said other information obtained packaged from the code number information is obtained by taking the ciphertexts obtained by encryption as the parameter values of the n parameters; and said other information packaged from the code number information is sent to the COS through the original interface in the operating system. In this way, the code number information may be packaged into said other information for transmission without modifying the original interface, so that the problem of high complexity in implementation of code number information transmission caused by modification of the original interface is solved, and an effect of reducing complexity in implementation of transmission of the code number information is achieved.

According to an exemplary embodiment, writing the code number information into the SIM card through the COS may include that:
decrypting through the COS the parameter values of the n parameters comprised in the received other information;
in case of successful decryption, detecting through the COS whether decrypted information meets a code number information format; and
when the decrypted information meets the code number information format, determining through the COS that the decrypted information is the code number information, and writing the code number information into the SIM card.

According to an exemplary embodiment, acquiring the code number information of the SIM card may include that:
accessing a data network; and
acquiring the code number information of the SIM card from the accessed data network.

According to the present disclosure, the code number information of the SIM card is acquired from the accessed data network, and the code number information is not required to be acquired from the network of the operator, so that the problem of incapability of acquiring the code number information when the SIM card may not access the network of the operator for reasons such as user's departure from a country is solved, and an effect of increasing success rate of code number information acquisition is achieved.

According to an exemplary embodiment, writing the code number information into the SIM card through the COS may include that:
when there is pre-stored code number information in the SIM card, updating through the COS the code number information pre-stored in the SIM card using the received code number information; and
when there is not pre-stored any code number information in the SIM card, writing the code number information into the SIM card through the COS.

According to the present disclosure, when there is not pre-stored any code number information in the SIM card, the code number information is written into the SIM card through the COS, so that a user may directly acquire a blank SIM card and write the code number information according to own requirement, and an application range of the SIM card is widened.

According to a second aspect of the embodiments of the present disclosure, there is provided an information writing device in accordance with claim 6, including:
an information acquisition module configured to acquire code number information of a SIM card, the code number information being verification information during access of the SIM card to a network of an operator;
an information sending module configured to send the code number information acquired by the information acquisition module to a COS of the SIM card through an original interface in an operating system, the original interface being a communication interface programmed for transmission of other information between the operating system and the COS; and
an information writing module configured to write the code number information sent by the information sending module into the SIM card through the COS.

According to a particular embodiment, the information sending module may include:
a parameter determination sub-module configured to determine n parameters included in said other information transmitted by virtue of the original interface, where n≥1;
an information encryption sub-module configured to encrypt the code number information, and obtain said other information packaged from the code number information by taking ciphertexts obtained by encryption as parameter values of the n parameters determined by the parameter determination sub-module; and
an information sending sub-module configured to send said other information packaged from the code number information encrypted by the information encryption sub-module to the COS through the original interface in the operating system.

According to a particular embodiment, the information writing module may include:
an information decryption sub-module configured to decrypt through the COS the parameter values of the n parameters included in the received other information;
a format detection sub-module configured to, in case of successful decryption, detect through the COS whether decrypted information meets a code number information format; and
an information writing sub-module configured to, when the decrypted information meets the code number information format, determine through the COS that the decrypted information is the code number information, and write the code number information into the SIM card.

According to a particular embodiment, the information acquisition module may include:
a network access sub-module configured to access a data network; and
an information acquisition sub-module configured to acquire the code number information of the SIM card from the accessed data network.

According to a particular embodiment, the information writing module may further be configured to:
when there is pre-stored code number information in the SIM card, update through the COS the code number information pre-stored in the SIM card using the received code number information;
when there is not pre-stored any code number information in the SIM card, write the code number information into the SIM card through the COS.

According to a fourth aspect, the disclosure is also directed to a computer program for executing the steps of an information writing method as described above when this program is executed by a computer.

This program can use any programming language and take the form of source code, object code or a code intermediate between source code and object code, such as a partially compiled form, or any other desirable form.

The disclosure is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

It is to be understood that the above general descriptions and detailed descriptions below are only exemplary and explanatory and not intended to limit the present disclosure.

### BRIEF DESCRIPTION OF THE DRAWINGS

The accompanying drawings, which are incorporated in and constitute a part of this specification, illustrate embodiments consistent with the present disclosure and, together with the specification, serve to explain the principles of the present disclosure.
Fig. 1 is a flow chart showing an information writing method according to an exemplary embodiment.
Fig. 2 is a flow chart showing an information writing method according to another exemplary embodiment.
Fig. 3 is a block diagram of an information writing device according to an exemplary embodiment.
Fig. 4 is a block diagram of an information writing device according to an exemplary embodiment.
Fig. 5 is a block diagram of an information writing device according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of devices and methods consistent with some aspects related to the present disclosure as recited in the appended claims.

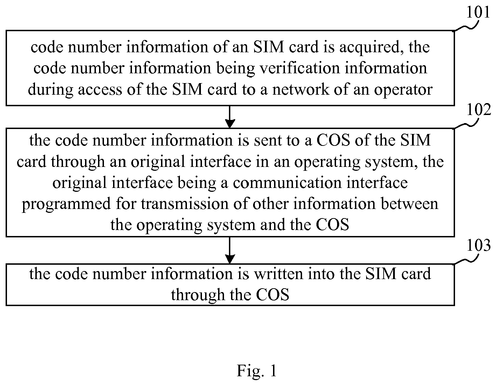

Fig. 1 is a flow chart showing an information writing method according to an exemplary embodiment, the information writing method is applied to a terminal, and as shown in Fig. 1, the information writing method includes the following steps:

Step 101: code number information of a Subscriber Identification Module (SIM) card is acquired, the code number information being verification information during access of the SIM card to a network of an operator;

Step 102: the code number information is sent to a Card Operating System (COS) of the SIM card through an original interface in an operating system, the original interface being a communication interface programmed for transmission of other information between the operating system and the COS; and

Step 103: the code number information is written into the SIM card through the COS.

From the above, according to the information writing method provided by the present disclosure, the code number information is sent to the COS of the SIM card through the original interface in the operating system, the original interface being the communication interface programmed for transmission of said other information between the operating system and the COS; and the code number information is written into the SIM card through the COS. In this way, the code number information can be transmitted through the original interface, so that not only complexity in implementation of transmission of the code number information is reduced, but also the problem of incapability of writing the code number information into the SIM card due to operator's limitation on reception of an OTA short message by a terminal is also solved, and an effect of increasing success rate of code number information writing is achieved.

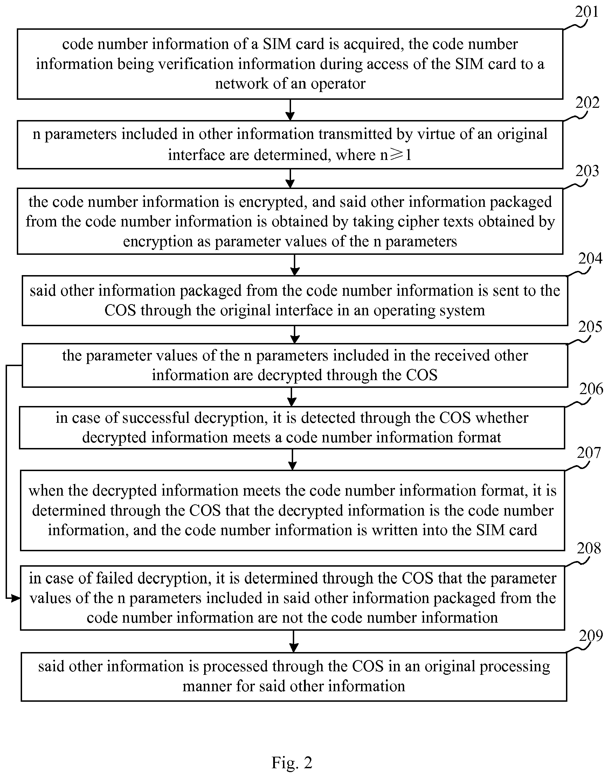

Fig. 2 is a flow chart showing an information writing method according to another exemplary embodiment, the information writing method is applied to a terminal, and as shown in Fig. 2, the information writing method includes the following steps.

Step 201: code number information of a SIM card is acquired, the code number information being verification information during access of the SIM card to a network of an operator.

Specifically, the step that the number code information of the SIM card is acquired includes that a data network is accessed; and the code number information of the SIM card is acquired from the accessed data network.

The data network is a network which may be accessed without a SIM card, and may be a wired network, a wireless network and the like, which is not limited in the embodiment. In a possible implementation mode, the data network may be a Wireless-Fidelity (WiFi) network.

The SIM card refers to a card storing a set of code number information in the terminal. The code number information refers to the verification information during access of the SIM card to the network of the operator. The code number information includes information such as an International Mobile Subscriber Identification Number (IMSI), a Key Identifier (KI), an Original Point Code (OPC) and a short message center number. When the code number information of the SIM card passes verification by the operator, the terminal may access the network of the operator through the SIM card, and a user may use a communication number corresponding to the code number information. For example, if the communication number corresponding to the SIM card is 150xxxxxxxx, after the terminal accesses the network of the operator, the user may use the communication number for sending a short message and making a call.

Since the data network is a network which may be accessed without a SIM card, when the user's terminal with the SIM card cannot access a local network of the operator for reasons such as user's departure from a country, the terminal may acquire the code number information through the data network, and it is unnecessary to purchase a roaming communication number specially for the SIM card to access a network of a local operator; and therefore, the cost of usage of the SIM card may be reduced.

After the terminal acquires the code number information, the terminal is required to send the acquired code number information to a COS in the SIM card, wherein the COS is an operating system of the SIM card. The terminal may send the code number information to the COS immediately when acquiring the code number information, that is, the code number information is sent to the COS when the terminal has a network connection; and the code number information may also be sent to the COS when the terminal is offline, and there are no limits made in the embodiment.

Step 202: n parameters included in other information transmitted by virtue of an original interface are determined, where n≥1.

The terminal is required to select, from the operating system, the original interface capable of communicating with the COS, the original interface is a communication interface programmed for transmission of said other information between the operating system and the COS, and said other information is information transmitted through the original interface when an original function of the original interface is implemented. For example, when the original interface is an SIM card short message read-write interface, the original function of the original interface is to read and write a short message of the SIM card, and at this moment, said other information is the short message; and when the original interface is a contact read-write interface, the original function of the original interface is to read and write a contact, and at this moment, said other information is contact information.

For different operating systems, the terminal selects different original interfaces. For example, when the operating system is an Android system below version 5.0, communication interfaces between the operating system and the COS are SIM card short message read-write and contact read-write interfaces, the terminal may select an interface from the two communication interfaces as the original interface; and when the operating system is an Android system above version 5.0, a communication interface between the operating system and the COS is an Integrated Circuit Card (ICC) interface, and the terminal takes the ICC interface as the original interface. When the operating system is an MTK system, a communication interface between the MTK system and the COS is a universal interface.

The original interface is configured to transmit said other information, thus the terminal is also required to package the code number information into said other information to ensure that the code number information transmitted by the original interface can be received by the COS, rather than being discarded by the COS due to not being able to be identified by the COS. During implementation, said other information usually includes fixed parameters, thus the terminal may package the code number information into the parameters in said other information. In such a manner, a developer is not required to modify the original interface, so that the problem of high complexity in implementation of code number information transmission caused by modification of the original interface is solved, and an effect of reducing complexity in implementation of transmission of the code number information is achieved.

Different other information is transmitted through different original interfaces, thus different original interfaces correspond to different parameters. For example, parameters of the contact read-write interface include a phone parameter and a name parameter.

Step 203: the code number information is encrypted, and said other information packaged from the code number information is obtained by taking ciphertexts obtained by encryption as parameter values of the n parameters.

After the code number information is packaged into said other information, the COS cannot identify whether the received other information is real other information or said other information packaged from the code number information, thus the terminal is also required to distinguish the real other information and said other information packaged from the code number information.

During implementation, the terminal packages the encrypted code number information into said other information. In such an implementation mode, an encryption key is stored in the terminal, a decryption key is stored in the COS, the encryption key and the decryption key may be a public/private key with respect to each other, and may also be a pair of symmetric keys, and there are no limits made in the embodiment.

In the embodiment, the terminal may generate said other information packaged from the code number information according to the number m of parameters included in the code number information and the number n of the parameters included in said other information.

When m<n, the terminal encrypts the m parameters included in the code number information to obtain m ciphertexts respectively, selects m parameters from the n parameters included in said other information, takes the m ciphertexts as parameter values of the m parameters respectively; and sets parameter values of the remaining n-m parameters to be preset values, or selects n-m ciphertexts from the m ciphertexts and takes the selected n-m ciphertexts as the parameter values of the remaining n-m parameters respectively. For example, when the code number information includes the IMSI and the parameters include the phone parameter and the name parameter, the terminal takes a ciphertext obtained by encrypting the IMSI as a parameter value of the phone parameter, and sets a parameter value of the name parameter to be a preset value, or, takes the ciphertext obtained by encrypting the IMSI as the parameter value of the name parameter.

When m=n, the terminal encrypts the m parameters to obtain m ciphertexts respectively, and takes the m ciphertexts as the parameter values of the n parameters included in said other information respectively. For example, when the code number information includes the IMSI and the KI and the parameters include the phone parameter and the name parameter, a ciphertext obtained by encrypting the IMSI may be taken as the parameter value of the phone parameter, and a ciphertext obtained by encrypting the KI may be taken as the parameter value of the name parameter.

When m>n, the terminal divides the parameters included in the code number information into n categories, encrypts the parameters of each category to obtain n cipher-texts, and takes n ciphertexts as the parameter values of the n parameters included in said other information. For example, when the code number information includes the IMSI, the KI and the short message service center number and the parameters include the phone parameter and the name parameter, the terminal divides the IMSI and the KI into a category, divides the short message service center number into another category, takes a ciphertext obtained by encrypting the IMSI and the KI as the parameter value of the phone parameter, and takes a ciphertext obtained by encrypting the short message service center number as the parameter value of the name parameter.

Step 204: said other information packaged from the code number information is sent to the COS through the original interface in an operating system.

Step 205: the parameter values of the n parameters included in the received other information are decrypted through the COS.

The COS decrypts the received other information by virtue of the decryption key, and in case of successful decryption by the COS, Step 206 is executed; and in case of failed decryption by the COS, Step 208 is executed.

Step 206: in case of successful decryption, it is detected through the COS whether decrypted information meets a code number information format.

The code number information format refers to a format of the code number information prior to encryption. When the code number information format is set, since the code number information includes multiple parameters, the terminal may set an expression for each parameter and combine expressions of all the parameters to obtain the code number information format, the expressions not including parameter values.

For example, the code number information format is IMSI=xxx&KI=xxx&OPC=xxx, or, the code number information format is a json object {{"ki":"xxx", "opc":"xxxx"}}, and there are no limits made in the embodiment.

During implementation, the terminal detects whether an expression of each parameter in the information is the same as an expression of the parameter in the code number information format, determines that the information meets the code number information format when the expression of each parameter is the same as the expression of the parameter in the code number information format, and determines that the information does not meet the code number information format when an expression of a parameter is different from an expression of any parameter in the code number information format.

Optionally, a sequence of the expressions of parameters may be different from a sequence of the expressions of the parameters in the code number information format.

Step 207: when the decrypted information meets the code number information format, it is determined through the COS that the decrypted information is the code number information, and the code number information is written into the SIM card.

When the decrypted information meets the code number information format, the COS determines that the received other information is said other information packaged from the code number information, thereby determining that the decrypted information is the code number information, and writes the code number information into the SIM card.

Step 208: in case of failed decryption, it is determined through the COS that the parameter values of the n parameters included in said other information are not the code number information.

When decryption fails, or, the code number decrypted information does not meet the preset code number information format, the COS determines that the received other information is the real other information.

Step 209: said other information is processed through the COS in an original processing manner for said other information.

For example, when the phone parameter is 138xxxxxxxx and the name parameter is Xiaoming, the COS creates contact information in the SIM card, and writes 138xxxxxxxx and Xiaoming into the contact information.

In the embodiment, the SIM card may be an SIM card with code number information pre-stored therein, and at this moment, the code number information pre-stored in the SIM card is updated through the COS using the received code number information. It is supposed that code number information 1 is pre-stored in the SIM card and code number information 1 passes verification of the network of the operator, the user communicates by virtue of communication number 1 corresponding to code number information 1; and after departure of the user, it is necessary to update communication number 1 into local communication number 2 to reduce communication charges, and then code number information 2 may be written into the SIM card by virtue of the COS, the COS updates code number information 1 using code number information 2, and when code number information 2 passes verification of the network of the operator, the user may use communication number 2 for communication.

In the embodiment, the SIM card may also be a SIM card with no code number information pre-stored therein, that is, the SIM card is a blank card, and at this moment, the code number information is written into the SIM card through the COS. In such a manner, the user may directly acquire the blank SIM card and write the code number information according to own requirement, so that an application range of the SIM card is widened.

From the above, according to the information writing method provided by the embodiment, the code number information is sent to the COS of the SIM card through the original interface in the operating system, the original interface being the communication interface programmed for transmission of said other information between the operating system and the COS; and the code number information is written into the SIM card through the COS. In this way, the code number information can be transmitted through the original interface, so that complexity in implementation of transmission of the code number information is reduced, the problem of incapability of writing the code number information into the SIM card due to operator's limitation on reception of an OTA short message by the terminal is also solved, and an effect of increasing success rate of code number information writing is achieved.

In addition, the code number information of the SIM card is acquired from the accessed data network, and the code number information is not required to be acquired from the network of the operator, so that the problem of incapability of acquiring the code number information when the SIM card cannot access the network of the operator for reasons such as user's departure from a country is solved, and an effect of increasing success rate of code number information acquisition is achieved.

The n parameters included in said other information transmitted by virtue of the original interface are determined; the code number information is encrypted, and said other information packaged from the code number information is obtained by taking the ciphertexts obtained by encryption as the parameter values of the n parameters; and said other information packaged from the code number information is sent to the COS through the original interface in the operating system. In this way, the code number information may be packaged into said other information for transmission without modifying the original interface, so that the problem of high complexity in implementation of code number information transmission caused by modification of the original interface is solved, and an effect of reducing complexity in implementation of transmission of the code number information is achieved.

When there is not pre-stored any code number information in the SIM card, the code number information is written into the SIM card through the COS, so that the user may directly acquire the blank SIM card and write the code number information according to own requirement, and the application range of the SIM card is widened.

The code number information is sent to the COS through the original interface in the operating system, so that transmission of the code number information is implemented on the basis of transmitting said other information between the operating system and the COS, and the function of the original interface is expanded.

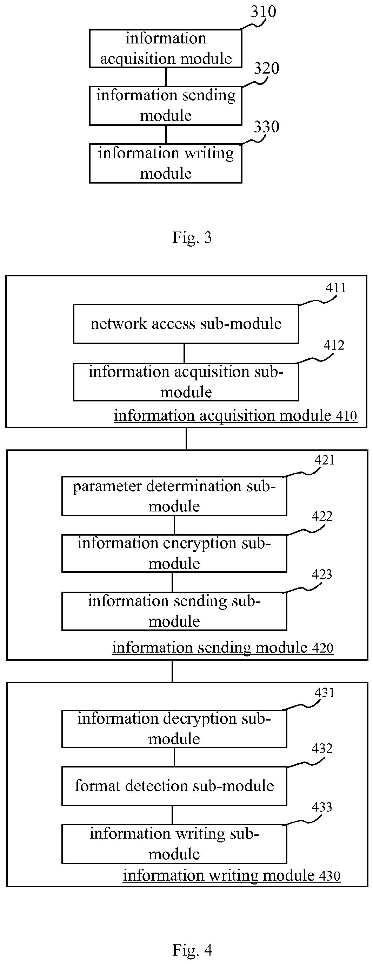

Fig. 3 is a block diagram of an information writing device according to an exemplary embodiment, the information writing device is applied to a terminal, and as shown in Fig. 3, the information writing device includes: an information acquisition module 310, an information sending module 320 and an information writing module 330;
the information acquisition module 310 is configured to acquire code number information of a SIM card, the code number information being verification information during access of the SIM card to a network of an operator;
the information sending module 320 is configured to send the code number information acquired by the information acquisition module 310 to a COS of the SIM card through an original interface in an operating system, the original interface being a communication interface programmed for transmission of other information between the operating system and the COS; and
the information writing module 330 is configured to write the code number information sent by the information sending module 320 into the SIM card through the COS.

From the above, according to the information writing device provided by the present disclosure, the code number information is sent to the COS of the SIM card through the original interface in the operating system, the original interface being the communication interface programmed for transmission of said other information between the operating system and the COS; and the code number information is written into the SIM card through the COS. In this way, the code number information can be transmitted through the original interface, so that complexity in implementation of transmission of the code number information is reduced, the problem of incapability of writing the code number information into the SIM card due to operator's limitation on reception of an OTA short message by a terminal is also solved, and an effect of increasing success rate of code number information writing is achieved.

Fig. 4 is a block diagram of an information writing device according to an exemplary embodiment, the information writing device is applied to a terminal, and as shown in Fig. 4, the information writing device includes: an information acquisition module 410, an information sending module 420 and an information writing module 430;
the information acquisition module 410 is configured to acquire code number information of a SIM card, the code number information being verification information during access of the SIM card to a network of an operator;
the information sending module 420 is configured to send the code number information acquired by the information acquisition module 410 to a COS of the SIM card through an original interface in an operating system, the original interface being a communication interface programmed for transmission of other information between the operating system and the COS; and
the information writing module 430 is configured to write the code number information sent by the information sending module 420 into the SIM card through the COS.

Optionally, the information sending module includes: a parameter determination sub-module 421, an information encryption sub-module 422 and an information sending sub-module 423;
the parameter determination sub-module 421 is configured to determine n parameters included in said other information transmitted by virtue of the original interface, where n≥1;
the information encryption sub-module 422 is configured to encrypt the code number information, and obtain said other information packaged from the code number information by taking ciphertexts obtained by encryption as parameter values of the n parameters determined by the parameter determination sub-module 421; and
the information sending sub-module 423 is configured to send said other information packaged from the code number information encrypted by the information encryption sub-module 422 to the COS through the original interface in the operating system.

Optionally, the information writing module 430 comprises: an information decryption sub-module 431, a format detection sub-module 432 and an information writing sub-module 433;
the information decryption sub-module 431 is configured to decrypt the parameter values of the n parameters included in the received other information are decrypted through the COS;
the format detection sub-module 432 is configured to, in case of successful decryption, detect through the COS whether decrypted information meets a code number information format; and
the information writing sub-module 433 is configured to, when the decrypted information meets the code number information format, determine through the COS that the decrypted information is the code number information, and write the code number information into the SIM card.

Optionally, the information acquisition module 410 further includes: a network access sub-module 411 and an information processing module 412;
the network access sub-module 411 is configured to access a data network; and
the information acquisition sub-module 412 is configured to acquire the code number information of the SIM card from the accessed data network.

Optionally, the information writing module 430 is further configured to:
when there is pre-stored code number information in the SIM card, update through the COS the code number information pre-stored in the SIM card using the received code number information;
when there is not pre-stored any code number information in the SIM card, write the code number information into the SIM card through the COS.

From the above, according to the information writing device provided by the present disclosure, the code number information is sent to the COS of the SIM card through the original interface in the operating system, the original interface being the communication interface programmed for transmission of said other information between the operating system and the COS; and the code number information is written into the SIM card through the COS. In this way, the code number information may be transmitted through the original interface, so that complexity in implementation of transmission of the code number information is reduced, the problem of incapability of writing the code number information into the SIM card due to operator's limitation on reception of an OTA short message by a terminal is also solved, and an effect of increasing success rate of code number information writing is achieved.

In addition, the code number information of the SIM card is acquired from the accessed data network, and the code number information is not required to be acquired from the network of the operator, so that the problem of incapability of acquiring the code number information when the SIM card may not access the network of the operator for reasons such as user's departure from a country is solved, and an effect of increasing success rate of code number information acquisition is achieved.

The n parameters included in said other information transmitted by virtue of the original interface are determined; the code number information is encrypted, and said other information packaged from the code number information is obtained by taking the ciphertexts obtained by encryption as the parameter values of the n parameters; and said other information packaged from the code number information is sent to the COS through the original interface in the operating system, and in such a manner, the code number information may be packaged into said other information for transmission without modifying the original interface, so that the problem of high complexity in implementation of code number information transmission caused by modification of the original interface is solved, and an effect of reducing complexity in implementation of transmission of the code number information is achieved.

When there is not pre-stored any code number information in the SIM card, the code number information is written into the SIM card through the COS, so that a user may directly acquire a blank SIM card and write the code number information according to own requirement, and an application range of the SIM card is widened.

The code number information is sent to the COS through the original interface in the operating system, so that transmission of the code number information is implemented on the basis of transmitting said other information between the operating system and the COS, and the function of the original interface is expanded.

With respect to the devices in the above embodiments, the specific manners for performing operations for individual modules therein have been described in detail in the embodiments regarding the methods, which will not be elaborated herein.

An exemplary embodiment of the present disclosure provides an information writing device, which may implement an information writing method provided by the present disclosure, and the information writing device includes: a processor and a memory configured to store an instruction executable for the processor,
wherein the processor is configured to:
acquire code number information of a SIM card, the code number information being verification information during access of the SIM card to a network of an operator;
send the code number information to a COS of the SIM card through an original interface in an operating system, the original interface being a communication interface programmed for transmission of other information between the operating system and the COS; and
write the code number information into the SIM card through the COS.

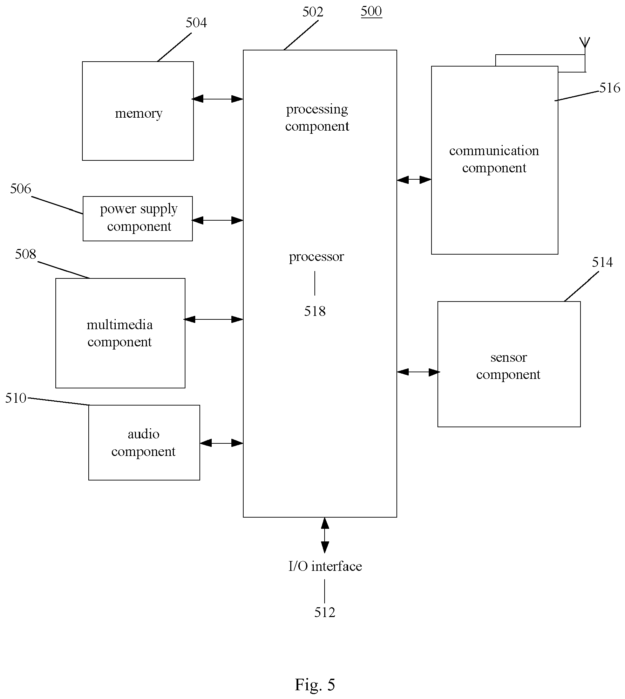

Fig. 5 is a block diagram of an information writing device 500 according to an exemplary embodiment. For example, the device 500 may be a mobile phone, a computer, a digital broadcast terminal, a messaging device, a gaming console, a tablet, a medical device, exercise equipment, a personal digital assistant and the like.

Referring to Fig. 5, the device 500 may include one or more of the following components: a processing component 502, a memory 504, a power supply component 506, a multimedia component 508, an audio component 510, an Input/Output (I/O) interface 512, a sensor component 514, and a communication component 516.

The processing component 502 typically controls overall operations of the device 500, such as the operations associated with display, telephone calls, data communications, camera operations, and recording operations. The processing component 502 may include one or more processors 518 to execute instructions to perform all or part of the steps in the abovementioned method. Moreover, the processing component 502 may include one or more modules which facilitate interaction between the processing component 502 and the other components. For instance, the processing component 502 may include a multimedia module to facilitate interaction between the multimedia component 508 and the processing component 502.

The memory 504 is configured to store various types of data to support the operation of the device 500. Examples of such data include instructions for any application programs or methods operated on the device 500, contact data, phonebook data, messages, pictures, video, etc. The memory 504 may be implemented by any type of volatile or non-volatile memory devices, or a combination thereof, such as a Static Random Access Memory (SRAM), an Electrically Erasable Programmable Read-Only Memory (EEPROM), an Erasable Programmable Read-Only Memory (EPROM), a Programmable Read-Only Memory (PROM), a Read-Only Memory (ROM), a magnetic memory, a flash memory, and a magnetic or optical disk.

The power supply component 506 provides power for various components of the device 500. The power supply component 506 may include a power management system, one or more power supplies, and other components associated with the generation, management and distribution of power for the device 500.

The multimedia component 508 includes a screen providing an output interface between the device 500 and a user. In some embodiments, the screen may include a Liquid Crystal Display (LCD) and a Touch Panel (TP). If the screen includes the TP, the screen may be implemented as a touch screen to receive an input signal from the user. The TP includes one or more touch sensors to sense touches, swipes and gestures on the TP. The touch sensors may not only sense a boundary of a touch or swipe action, but also sense a duration and pressure associated with the touch or swipe action. In some embodiments, the multimedia component 508 includes a front camera and/or a rear camera. The front camera and/or the rear camera may receive external multimedia data when the device 500 is in an operation mode, such as a photographing mode or a video mode. Each of the front camera and the rear camera may be a fixed optical lens system or have focusing and optical zooming capabilities.

The audio component 510 is configured to output and/or input an audio signal. For example, the audio component 510 includes a Microphone (MIC), and the MIC is configured to receive an external audio signal when the device 500 is in the operation mode, such as a call mode, a recording mode and a voice recognition mode. The received audio signal may be further stored in the memory 504 or sent through the communication component 516. In some embodiments, the audio component 510 further includes a speaker configured to output the audio signal.

The I/O interface 512 provides an interface between the processing component 502 and a peripheral interface module, and the peripheral interface module may be a keyboard, a click wheel, a button and the like. The button may include, but not limited to: a home button, a volume button, a starting button and a locking button.

The sensor component 514 includes one or more sensors configured to provide status assessment in various aspects for the device 500. For instance, the sensor component 514 may detect an on/off status of the device 500 and relative positioning of components, such as a display and small keyboard of the device 500, and the sensor component 514 may further detect a change in a position of the device 500 or a component of the device 500, presence or absence of contact between the user and the device 500, orientation or acceleration/deceleration of the device 500 and a change in temperature of the device 500. The sensor component 514 may include a proximity sensor configured to detect presence of an object nearby without any physical contact. The sensor component 514 may also include a light sensor, such as a Complementary Metal Oxide Semiconductor (CMOS) or Charge Coupled Device (CCD) image sensor, configured for use in an imaging application. In some embodiments, the sensor component 514 may also include an acceleration sensor, a gyroscope sensor, a magnetic sensor, a pressure sensor or a temperature sensor.

The communication component 516 is configured to facilitate wired or wireless communication between the device 500 and another device. The device 500 may access a communication-standard-based wireless network, such as a WiFi network, a 2nd-Generation (2G) or 3rd-Generation (3G) network or a combination thereof. In an exemplary embodiment, the communication component 516 receives a broadcast signal or broadcast associated information from an external broadcast management system through a broadcast channel. In an exemplary embodiment, the communication component 516 further includes a Near Field Communication (NFC) module to facilitate short-range communication. For example, the NFC module may be implemented on the basis of a Radio Frequency Identification (RFID) technology, an Infrared Data Association (IrDA) technology, an Ultra-WideBand (UWB) technology, a BlueTooth (BT) technology and another technology.

In an exemplary embodiment, the device 500 may be implemented by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, and is configured to execute the abovementioned method.

In an exemplary embodiment, there is also provided a non-transitory computer-readable storage medium including an instruction, such as the memory 504 including an instruction, and the instruction may be executed by the processor 518 of the device 500 to implement the abovementioned method. For example, the non-transitory computer-readable storage medium may be a ROM, a Radom Access Memory (RAM), a Compact Disc Read-Only Memory (CD-ROM), a magnetic tape, a floppy disc, an optical data storage device and the like.

Other embodiments of the present disclosure will be apparent to those skilled in the art from consideration of the specification and practice of the present disclosure. This application is intended to cover any variations, uses, or adaptations of the present disclosure following the general principles thereof and including such departures from the present disclosure as come within known or customary practice in the art. It is intended that the specification and examples be considered as exemplary only, with a true scope of the present disclosure being indicated by the following claims.

It will be appreciated that the present disclosure is not limited to the exact construction that has been described above and illustrated in the accompanying drawings, and that various modifications and changes may be made without departing from the scope thereof. It is intended that the scope of the present disclosure only be limited by the appended claims.

## Claims

1. An information writing method, comprising:
acquiring (101, 201), by a terminal, code number information of a Subscriber Identification Module, SIM, card, the code number information being verification information during access of the SIM card to a network of an operator;
sending (102), by the terminal, the code number information to a Card Operating System, COS, of the SIM card through an original interface in an operating system, the original interface being a communication interface programmed for transmission of other information between the operating system and the COS; the other information is information transmitted through the original interface when an original function of the original interface is implemented; and
writing (103), by the COS, the code number information into the SIM card;
wherein sending, by the terminal, the code number information to the COS of the SIM card through the original interface in the operating system comprises:
encrypting the code number information and obtaining said other information packaged from the encrypted code number information; and
sending (204) said other information packaged from the encrypted code number information to the COS through the original interface in the operating system;
wherein writing (103), by the COS, the code number information into the SIM card comprises:
decrypting, by the COS, the received other information;
in case of successful decryption, detecting (206), by the COS, whether the decrypted information meets a code number information format; and
when the decrypted information meets the code number information format, determining (207), by the COS, that the decrypted information is the code number information, and writing the code number information into the SIM card.

2. The method according to claim 1, wherein encrypting the code number information and obtaining said other information packaged from the encrypted code number information comprises:
determining (202) n parameters comprised in said other information transmitted by virtue of the original interface, where n≥1;
encrypting (203) the code number information, and obtaining said other information packaged from the code number information by taking cipher texts obtained by encryption as parameter values of the n parameters.

3. The method according to claim 2, wherein decrypting, by the COS, the received other information comprises:
decrypting (205), by the COS, the parameter values of the n parameters comprised in the received other information.

4. The method according to claim 1, wherein acquiring, by the terminal, the code number information of the SIM card comprises:
accessing a data network; and
acquiring the code number information of the SIM card from the accessed data network.

5. The method according to any one of claims 1-4, wherein writing, by the COS, the code number information into the SIM card comprises:
when there is pre-stored code number information in the SIM card, updating, by the COS, the code number information pre-stored in the SIM card using the received code number information;
when there is not pre-stored any code number information in the SIM card, writing, by the COS, the code number information into the SIM card.

6. An information writing device, comprising a terminal and a Subscriber Identification Module, SIM, card;
wherein the terminal comprises:
an information acquisition module (310) configured to acquire code number information of the SIM card, the code number information being verification information during access of the SIM card to a network of an operator; and
an information sending module (320) configured to send the code number information acquired by the information acquisition module (310) to a Card Operating System, COS, of the SIM card through an original interface in an operating system, the original interface being a communication interface programmed for transmission of other information between the operating system and the COS; the other information is information transmitted through the original interface when an original function of the original interface is implemented;
wherein the information sending module (320) comprises:
an information encryption sub-module (422) configured to encrypt the code number information, and obtain said other information packaged from the encrypted code number information; and
an information sending sub-module (423) configured to send said other information packaged from the code number information encrypted by the information encryption sub-module (422) to the COS through the original interface in the operating system;
wherein the SIM card comprises:
an information writing module (330) configured to write the code number information sent from the information sending module (320) into the SIM card;
wherein the information writing module (330) comprises:
an information decryption sub-module (431) configured to decrypt through the COS the received other information;
a format detection sub-module (432) configured to, in case of successful decryption, detect through the COS whether the decrypted information meets a code number information format; and
an information writing sub-module (433) configured to, when the decrypted information meets the code number information format, determine through the COS that the decrypted information is the code number information, and write the code number information into the SIM card.

7. The device according to claim 6, wherein the information sending module (320) further comprises:
a parameter determination sub-module (421) configured to determine n parameters comprised in said other information transmitted by virtue of the original interface, where n≥ 1;
wherein the information encryption sub-module (422) is further configured to encrypt the code number information, and obtain said other information packaged from the code number information by taking cipher texts obtained by encryption as parameter values of the n parameters determined by the parameter determination sub-module (421).

8. The device according to claim 7, wherein the information decryption sub-module (431) is configured to decrypt through the COS the parameter values of the n parameters comprised in the received other information.

9. The device according to claim 6, wherein the information acquisition module comprises:
a network access sub-module (411) configured to access a data network; and
an information acquisition sub-module (412) configured to acquire the code number information of the SIM card from the accessed data network.

10. The device according to any one of claims 6-9, wherein the information writing module (330) is further configured to:
when there is pre-stored code number information in the SIM card, update through the COS the code number information pre-stored in the SIM card using the received code number information;
when there is not pre-stored any code number information in the SIM card, write the code number information into the SIM card through the COS.

## Patentansprüche

1. Informationsschreibverfahren mit folgenden Schritten:
Erfassen (101, 201), mittels eines Endgeräts, von Codenummer-Informationen einer Subscriber-Identification-Module, SIM, -Karte, wobei die Codenummer-Informationen Verifizierungsinformationen während des Zugriffs der SIM-Karte auf ein Netzwerk eines Betreibers sind;
Senden (102), mittels des Endgeräts, der Codenummer-Informationen an ein Kartenbetriebssystem, COS, der SIM-Karte über eine ursprüngliche Schnittstelle in einem Betriebssystem, wobei die ursprüngliche Schnittstelle eine Kommunikationsschnittstelle ist, die zur Übertragung von anderen Informationen zwischen dem Betriebssystem und dem COS programmiert ist; wobei es sich bei den anderen Informationen um Informationen handelt, die über die ursprüngliche Schnittstelle übertragen werden, wenn eine ursprüngliche Funktion der ursprünglichen Schnittstelle implementiert ist; und
Schreiben (103), mittels des COS, der Codenummer-Informationen auf die SIM-Karte;
wobei das Senden, mittels des Endgeräts, der Codenummer-Informationen an das COS der SIM-Karte über die ursprüngliche Schnittstelle in dem Betriebssystem umfasst:
Verschlüsseln der Codenummer-Informationen und Erhalten der anderen Informationen, die aus den verschlüsselten Codenummer-Informationen verpackt sind; und
Senden (204) der anderen Informationen, die aus den verschlüsselten Codenummer-Informationen verpackt sind, an das COS über die ursprüngliche Schnittstelle in dem Betriebssystem;
wobei das Schreiben (103), mittels des COS, der Codenummer-Informationen auf die SIM-Karte Folgendes umfasst:
Entschlüsseln, mittels des COS, der empfangenen anderen Informationen;
im Falle einer erfolgreichen Entschlüsselung, Detektieren (206), mittels des COS, ob die entschlüsselten Informationen einem Codenummer-Informationsformat entsprechen; und
wenn die entschlüsselten Informationen dem Codenummer-Informationsformat entsprechen, Bestimmen (207), mittels des COS, dass die entschlüsselten Informationen Codenummer-Informationen sind, und Schreiben der Codenummer-Informationen auf die SIM-Karte.

2. Verfahren nach Anspruch 1, wobei das Verschlüsseln der Codenummer-Informationen und das Erhalten der anderen Informationen, die aus den verschlüsselten Codenummer-Informationen verpackt sind, umfasst:
Bestimmen (202) von n Parametern, die in den anderen Informationen enthalten sind, welche mittels der ursprünglichen Schnittstelle übertragen werden, wobei n ≥ 1;
Verschlüsseln (203) der Codenummer-Informationen und Erhalten der anderen Informationen, die aus den Codenummer-Informationen verpackt sind, indem durch die Verschlüsselung erhaltene chiffrierte Texte als Parameterwerte der n Parameter verwendet werden.

3. Verfahren nach Anspruch 2, wobei das Entschlüsseln, mittels des COS, der empfangenen anderen Informationen umfasst:
Entschlüsseln (205), mittels des COS, der Parameterwerte der n Parameter, die in den empfangenen anderen Informationen enthalten sind.

4. Verfahren nach Anspruch 1, wobei das Erfassen, mittels des Endgeräts, der Codenummer-Informationen der SIM-Karte umfasst:
Zugreifen auf ein Datennetzwerk; und
Erfassen der Codenummer-Informationen der SIM-Karte aus dem zugegriffenen Datennetzwerk.

5. Verfahren nach einem der Ansprüche 1-4, wobei das Schreiben, mittels des COS, der Codenummer-Informationen auf die SIM-Karte umfasst:
wenn bereits gespeicherte Codenummer-Informationen auf der SIM-Karte sind, Aktualisieren, mittels des COS, der bereits auf der SIM-Karte gespeicherten Codenummer-Informationen unter Verwendung der empfangenen Codenummer-Informationen;
wenn keine bereits gespeicherten Codenummer-Informationen auf der SIM-Karte sind, Schreiben, mittels des COS, der Codenummer-Informationen auf die SIM-Karte.

6. Informationsschreibvorrichtung mit einem Endgerät und einer Subscriber-Identification-Module, SIM, -Karte;
wobei das Endgerät aufweist:
ein Informationserfassungsmodul (310), das zum Erfassen von Codenummer-Informationen der SIM-Karte konfiguriert ist, wobei die Codenummer-Informationen Verifizierungsinformationen während des Zugriffs der SIM-Karte auf ein Netzwerk eines Betreibers sind; und ein Informationssendemodul (320), das konfiguriert ist zum Senden der mittels des Informationserfassungsmoduls (310) erfassten Codenummer-Informationen an ein Kartenbetriebssystem, COS, der SIM-Karte über eine ursprüngliche Schnittstelle in einem Betriebssystem, wobei die ursprüngliche Schnittstelle eine Kommunikationsschnittstelle ist, die zur Übertragung von anderen Informationen zwischen dem Betriebssystem und dem COS programmiert ist; wobei es sich bei den anderen Informationen um Informationen handelt, die über die ursprüngliche Schnittstelle übertragen werden, wenn eine ursprüngliche Funktion der ursprünglichen Schnittstelle implementiert ist;
wobei das Informationssendemodul (320) aufweist:
ein Informationsverschlüsselungs-Untermodul (422), das konfiguriert ist zum Verschlüsseln der Codenummer-Informationen und zum Erhalten der anderen Informationen, die aus den verschlüsselten Codenummer-Informationen verpackt sind; und
ein Informationssende-Untermodul (423), das konfiguriert ist zum Senden der anderen Informationen, die aus den mittels des Informationsverschlüsselungs-Untermoduls (422) verschlüsselten Codenummer-Informationen verpackt sind, an das COS über die ursprüngliche Schnittstelle in dem Betriebssystem;
wobei die SIM-Karte aufweist:
ein Informationsschreibmodul (330), das konfiguriert ist zum Schreiben der von dem Informationssendemodul (320) gesendeten Codenummer-Informationen auf die SIM-Karte wobei das Informationsschreibmodul (330) aufweist:
ein Informationsentschlüsselungs-Untermodul (431), das konfiguriert ist zum Entschlüsseln, über das COS, der empfangenen anderen Informationen;
ein Formatdetektions-Untermodul (432), das im Falle einer erfolgreichen Entschlüsselung konfiguriert ist zum Detektieren über das COS, ob die entschlüsselten Informationen einem Codenummer-Informationsformat entsprechen; und
ein Informationsschreib-Untermodul (433), das konfiguriert ist, wenn die entschlüsselten Informationen dem Codenummer-Informationsformat entsprechen, zum Bestimmen über das COS, dass die entschlüsselten Informationen Codenummer-Informationen sind, und zum Schreiben der Codenummer-Informationen auf die SIM-Karte.

7. Vorrichtung nach Anspruch 6, wobei das Informationssendemodul (320) ferner aufweist:
ein Parameterbestimmungs-Untermodul (421), das konfiguriert ist zum Bestimmen von n Parametern, die in den anderen Informationen enthalten sind, welche mittels der ursprünglichen Schnittstelle übertragen werden, wobei n ≥ 1;
wobei das Informationsverschlüsselungs-Untermodul (422) ferner konfiguriert ist zum Verschlüsseln der Codenummer-Informationen und zum Erhalten der anderen Informationen, die aus den Codenummer-Informationen verpackt sind, indem durch die Verschlüsselung erhaltene chiffrierte Texte als Parameterwerte der n Parameter verwendet werden, die mittels des Parameterbestimmungs-Untermoduls (421) bestimmt werden.

8. Vorrichtung nach Anspruch 7, wobei das Informationsentschlüsselungs-Untermodul (431) konfiguriert ist zum Entschlüsseln, über das COS, der Parameterwerte der n Parameter, die in den empfangenen anderen Informationen enthalten sind.

9. Vorrichtung nach Anspruch 6, wobei das Informationserfassungsmodul aufweist:
ein Netzwerkzugriff-Untermodul (411), das konfiguriert ist zum Zugreifen auf ein Datennetzwerk; und
ein Informationserfassungs-Untermodul (412), das konfiguriert ist zum Erfassen der Codenummer-Informationen der SIM-Karte aus dem zugegriffenen Datennetzwerk.

10. Vorrichtung nach einem der Ansprüche 6-9, wobei das Informationsschreibmodul (330) ferner für Folgendes konfiguriert ist:
wenn bereits gespeicherte Codenummer-Informationen auf der SIM-Karte sind, Aktualisieren, über das COS, der bereits auf der SIM-Karte gespeicherten Codenummer-Informationen unter Verwendung der empfangenen Codenummer-Informationen;
wenn keine bereits gespeicherten Codenummer-Informationen auf der SIM-Karte sind, Schreiben der Codenummer-Informationen auf die SIM-Karte über das COS.

## Revendications

1. Procédé d'écriture d'informations, comprenant le fait de:
acquérir (101, 201), par un terminal, les informations de numéro de code d'une carte d'un Module d'Identification d'Abonné, SIM, les informations de numéro de code étant des informations de vérification pendant l'accès de la carte SIM à un réseau d'un opérateur;
envoyer (102), par le terminal, les informations de numéro de code à un Système d'Exploitation de Carte, COS, de la carte SIM par l'intermédiaire d'une interface originale dans un système d'exploitation, l'interface originale étant une interface de communication programmée pour la transmission d'autres informations entre les système d'exploitation et le COS; les autres informations sont des informations transmises par l'intermédiaire de l'interface originale lorsqu'est mise en œuvre une fonction originale de l'interface originale; et
écrire (103), par le COS, les informations de numéro de code dans la carte SIM;
dans lequel l'envoi, par le terminal, des informations de numéro de code au COS de la carte SIM par l'intermédiaire de l'interface originale dans le système d'exploitation comprend le fait de:
crypter les informations de numéro de code et obtenir lesdites autres informations conditionnées à partir des informations de numéro de code cryptées; et
envoyer (204) lesdites autres informations conditionnées à partir des informations de numéro de code cryptées au COS par l'intermédiaire de l'interface originale dans le système d'exploitation;
dans lequel l'écriture (103), par le COS, des informations de numéro de code dans la carte SIM comprend le fait de:
décrypter, par le COS, les autres informations reçues;
en cas de décryptage réussi, détecter (206), par le COS, si les informations décryptées remplissent les conditions requises de format d'informations de numéro de code; et
lorsque les informations décryptées remplissent les conditions requises de format d'informations de numéro de code, déterminer (207), par le COS, que les informations décryptées sont les informations de numéro de code, et écrire les informations de numéro de code dans la carte SIM.

2. Procédé selon la revendication 1, dans lequel le cryptage des informations de numéro de code et l'obtention desdites autres informations conditionnées à partir des informations de numéro de code cryptées comprennent le fait de:
déterminer (202) n paramètres compris dans lesdites autres informations transmises à l'aide de l'interface originale, où n >> 1;
crypter (203) les informations de numéro de code et obtenir lesdites autres informations conditionnées à partir des informations de numéro de code en prenant les textes codés obtenus par cryptage comme valeurs de paramètre des n paramètres.

3. Procédé selon la revendication 2, dans lequel le décryptage, par le COS, des autres informations reçues comprend le fait de:
décrypter (205), par le COS, les valeurs de paramètre des n paramètres compris dans les autres informations reçues.

4. Procédé selon la revendication 1, dans lequel l'acquisition, par le terminal, des informations de numéro de code de la carte SIM comprend le fait de:
accéder à un réseau de données; et
acquérir les informations de numéro de code de la carte SIM à partir du réseau de données accédé.

5. Procédé selon l'une quelconque des revendications 1 à 4, dans lequel l'écriture, par le COS, des informations de numéro de code dans la carte SIM comprend le fait de:
lorsqu'il y a des informations de numéro de code pré-mémorisées dans la carte SIM, mettre à jour, par le COS, les informations de numéro de code pré-mémorisées dans la carte SIM à l'aide des informations de numéro de code reçues;
lorsqu'il n'y a pas d'informations de numéro de code pré-mémorisées dans la carte SIM, écrire, par le COS, les informations de numéro de code dans la carte SIM.

6. Dispositif d'écriture d'informations, comprenant un terminal et une carte de Module d'Identification d'Abonné, SIM;
dans lequel le terminal comprend:
un module d'acquisition d'informations (310) configuré pour acquérir les informations de numéro de code de la carte SIM, les informations de numéro de code étant des informations de vérification pendant l'accès de la carte SIM à un réseau d'un opérateur; et
un module d'envoi d'informations (320) configuré pour envoyer les informations de numéro de code acquises par le module d'acquisition d'informations (310) à un Système d'Exploitation de Carte, COS, de la carte SIM par l'intermédiaire d'une interface originale dans un système d'exploitation, l'interface originale étant une interface de communication programmée pour la transmission d'autres informations entre le système d'exploitation et le COS; les autres informations sont des informations transmises par l'intermédiaire de l'interface originale lorsqu'est mise en œuvre une fonction originale de l'interface originale;
dans lequel le module d'envoi d'informations (320) comprend:
un sous-module de cryptage d'informations (422) configuré pour crypter les informations de numéro de code, et pour obtenir lesdites autres informations conditionnées à partir des informations de numéro de code cryptées; et
un sous-module d'envoi d'informations (423) configuré pour envoyer lesdites autres informations conditionnées à partir des informations de numéro de code cryptées par le sous-module de cryptage d'informations (422) au COS par l'intermédiaire de l'interface originale dans le système d'exploitation;
dans lequel la carte SIM comprend:
un module d'écriture d'informations (330) configuré pour écrire les informations de numéro de code envoyées du module d'envoi d'informations (320) vers la carte SIM;
dans lequel le module d'écriture d'informations (330) comprend:
un sous-module de décryptage d'informations (431) configuré pour décrypter par l'intermédiaire du COS les autres informations reçues;
un sous-module de détection de format (432) configuré pour, en cas de décryptage réussi, détecter par l'intermédiaire du COS si les informations décryptées remplissent les conditions requises de format d'informations de numéro de code; et
un sous-module d'écriture d'informations (433) configuré pour déterminer, lorsque les informations décryptées remplissent les conditions requises de format d'informations de numéro de code, par l'intermédiaire du COS que les informations décryptées sont les informations de numéro de code, et écrire les informations de numéro de code dans la carte SIM.

7. Dispositif selon la revendication 6, dans lequel le module d'envoi d'informations (320) comprend par ailleurs:
un sous-module de détermination de paramètre (421) configuré pour déterminer n paramètres compris dans lesdites autres informations transmises à l'aide de l'interface originale, où n >> 1;
dans lequel le sous-module de cryptage d'informations (422) est par ailleurs configuré pour crypter les informations de numéro de code, et pour obtenir lesdites autres informations conditionnées à partir des informations de numéro de code en prenant les textes codés obtenus par cryptage comme valeurs de paramètre des n paramètres déterminés par le sous-module de détermination de paramètre (421).

8. Dispositif selon la revendication 7, dans lequel le sous-module de décryptage d'informations (431) est configuré pour décrypter par l'intermédiaire du COS les valeurs de paramètre des n paramètres compris dans les autres informations reçues.

9. Dispositif selon la revendication 6, dans lequel le module d'acquisition d'informations comprend:
un sous-module d'accès au réseau (411) configuré pour accéder à un réseau de données; et
un sous-module d'acquisition d'informations (412) configuré pour acquérir les informations de numéro de code de la carte SIM à partir du réseau de données accédé.

10. Dispositif selon l'une quelconque des revendications 6 à 9, dans lequel le module d'écriture d'informations (330) est par ailleurs configuré pour:
lorsqu'il y a des informations de numéro de code pré-mémorisées dans la carte SIM, mettre à jour par l'intermédiaire du COS les informations de numéro de code pré-mémorisées dans la carte SIM à l'aide des informations de numéro de code reçues;
lorsqu'il n'y a pas d'informations de numéro de code pré-mémorisées dans la carte SIM, écrire les informations de numéro de code dans la carte SIM par l'intermédiaire du COS.
